# EUROPÄISCHE PATENTSCHRIFT

(11) **EP 3 135 908 B1**
(45) Veröffentlichungstag und Bekanntmachung des Hinweises auf die Patenterteilung: **01.08.2018**
(21) Anmeldenummer: 16184660.5
(22) Anmeldetag: 18.08.2016
(51) Int. Cl.: F04B 3/00, F04B 17/04, F03B 17/06

(54) **FLUIDENERGIEMASCHINE MIT ELEKTROMAGNETISCH GEKOPPELTEN KOLBEN**
FLUID ENERGY MACHINE WITH ELECTROMAGNETICALLY COUPLED PISTONS
MACHINE A ENERGIE HYDRAULIQUE DOTEE DE PISTON A ACCOUPLEMENT ELECTROMAGNETIQUE

(30) Priorität: 31.08.2015 DE 102015114491; 26.10.2015 DE 102015118230
(43) Veröffentlichungstag der Anmeldung: 01.03.2017
(73) Patentinhaber: Hagenbucher, Stephan, 01277 Dresden (DE)
(72) Erfinder: Hagenbucher, Stephan, 01277 Dresden (DE)
(74) Vertreter: Kaufmann, Sigfrid

(56) Entgegenhaltungen:
- AT-B- 193 723
- JP-A- 2003 328 929
- US-A1- 2002 081 219
- US-A1- 2010 166 587
- US-B1- 6 352 455

## Beschreibung

Die Erfindung betrifft eine Fluidenergiemaschine mit elektromagnetisch gekoppelten Kolben zur Förderung eines flüssigen Mediums sowie zur Gewinnung von Energie aus der kinetischen und/oder potenziellen Energie eines flüssigen Mediums.

Fluidenergiemaschinen sind in einer Vielzahl von Bauformen, z. B. als Strömungsmaschinen oder Kolbenmaschinen, bekannt.

Bei Förderung von flüssigen Medien durch Strömungsmaschinen sind Propeller verbreitet. Nachteilig bei der Verwendung von Strömungsmaschinen - wie Propellern - z. B. als Schiffsantriebe ist die Wirbelbildung und der damit verbundene Effizienzverlust. Mit der Wirbelbildung sind unerwünschte Schallemissionen verbunden. Weiterhin besteht bei derartigen Antrieben die Gefahr der Verletzung von Wasserorganismen.

Bei anderen Bauformen von Fluidenergiemaschinen, den Kolbenmaschinen, ist typischerweise eine effektive Abdichtung zwischen dem Bereich des Fluids und dem Bereich des Energie zu- bzw. abführenden Aggregats erforderlich.

Elektromagnetische Pumpen mit zwei in einem Zylinder beweglichen Hubkolben sind in JP 2003 328 929 A und US 8 449 274 B1 beschrieben. Im Betrieb werden die Kolben während der Hubbewegung der Kolben wechselweise aufeinander zu und voneinander weg bewegt, wodurch die Durchlässe in den Kolben geöffnet bzw. verschlossen werden. Diese Ventilsteuerung der Durchlässe ermöglicht die gezielte Förderung fluider Medien während der Hubbewegungen der Kolben.

In AT 193 723 B ist eine elektromagnetische Pumpe mit Schwingkolben offenbart, wobei der Schwingkolben eine innerhalb des Kolbenmantels oder anschließend an diesen befindliche V-förmig gefaltete Doppelklappe mit frei schwingenden Klappen aufweist. Die Doppelklappe wirkt während des Pumpvorgangs als Ventil.

DE 28 12 479 C2 beschreibt eine Förderpumpe mit einer Schubplatte, die mittels einer Schubstange derart gesteuert wird, dass das Pumpengehäuse während der Pumpbewegung durch Schwenken der Schubplatte wechselweise geöffnet bzw. verschlossen wird.

Für Schiffe ist in DE 921 434 B ein Antrieb offenbart, bei dem durch Öffnungen im Schiffsrumpf Wasser angesaugt und durch im Schiffsrumpf angeordnete Pumpen mit erhöhtem Druck nach hinten aus im Schiffsrumpf angeordneten Öffnungen verdrängt bzw. hinausgedrückt wird. Für diesen Schiffantrieb werden jedoch klassische Pumpensysteme zur Förderung des Wassers genutzt, die folglich die Nachteile der Wirbelbildung bzw. der Abdichtungen aufweisen.

Die Aufgabe der Erfindung besteht darin, eine Fluidenergiemaschine zur Förderung eines flüssigen Mediums sowie zur Gewinnung von Energie aus der kinetischen und/oder potenziellen Energie eines flüssigen Mediums bereitzustellen, bei der das Energie zu- bzw. abführenden Aggregat vom flüssigen Medium bzw. von den das flüssige Medium fördernden Bauteilen bzw. vom flüssigen Medium bewegten Bauteilen vollständig räumlich getrennt ist, eine hohen Effizienz aufweist, keine Wirbelbildung verursacht und weitgehend schallemissionsfrei arbeitet.

Die Aufgabe wird gemäß der Erfindung mit den Merkmalen nach dem Patentanspruch 1 gelöst; zweckmäßige Weiterbildungen der Erfindung sind in den Unteransprüchen 2 bis 7 beschrieben, vorteilhafte Verwendungen ergeben sich aus den Ansprüchen 8 und 9.

Erfindungsgemäß umfasst die Fluidenergiemaschine einen durch eine Wandung umschlossenen längsausgedehnten Hohlraum, innerhalb dessen zumindest zwei Kolben in Längsrichtung verschiebbar geführt sind, und ein außerhalb der Wandung angeordnetes Energieaggregat, das mittels elektromagnetischer Wechselwirkung mit den Kolben gekoppelt ist.

Die Besonderheit besteht darin, dass die Kolben als Hohlkolben mit einem Mantel ausgebildet sind und so einen Durchlass für das Medium ermöglichen. Damit entspricht der Grundkörper eines Kolbens z. B. mit kreisförmigem Querschnitt einem Zylindermantel. An dem Mantel des ersten Kolbens, im Weiteren als Arbeitskolben bezeichnet, sind zwei Klappen schwenkbar befestigt. Dabei sind die Klappen so ausgebildet, dass durch diese der Durchlass des Arbeitskolbens verschließbar ist. Bei Bewegung des Arbeitskolbens im Hohlraum mit geschlossenen Klappen verdrängt dieser das flüssige Medium und verrichtet somit Arbeit. Bei der Bewegung mit geöffneten Klappen kann der Arbeitskolben, ohne Arbeit zu verrichten, bewegt werden, z. B. um in die Ausgangsposition zurückgefahren zu werden.

Der im Hohlraum angeordnete zweite Kolben, im Weiteren als Steuerkolben bezeichnet, ist gleichfalls als Hohlkolben ausgebildet und durch Stellverbinder beweglich mit den Klappen des Arbeitskolbens verbunden. Durch die Veränderung des Abstands zum Arbeitskolben sind die Klappen aufklappbar oder verschließbar. Die Klappen sind in jeder Position durch gleichbleibenden Abstand des Arbeitskolbens zum Steuerkolben fixierbar. Somit wirken die Klappen als steuerbare Ventile. Die Klappenform ermöglicht einen maximalen Querschnitt des Durchlasses und damit eine nahezu ungestörte Bewegung des Arbeitskolbens bei geöffneten Klappen.

Die Klappen haben jeweils etwa die Größe und Form des halben Durchlasses. Sie sind durch eine drehbare Lagerung in der Richtung der Mittellinie mit dem Mantel des Arbeitskolbens verbunden. Die sich gegenüberliegenden Klappen verschließen so den Durchlass, wenn sie quer zur Längsrichtung orientiert sind. Werden sie in Längsrichtung ausgerichtet, verringern die Klappen den Durchlassquerschnitt nur mit ihrem Profil.

Zum Transport des Mediums, werden die Klappen geschlossen. Bei der Bewegung des Kolbens mit geschlossenen Klappen wird das Medium verdrängt und damit entsprechend Arbeit verrichtet. Die Rückbewegung des Arbeitskolbens erfolgt bei geöffneten Klappen, ohne dass dabei, abgesehen von der Reibung, auf das Medium eingewirkt wird. Nachfolgend werden die Klappen geschlossen und die Bewegung des Arbeitskolbens verrichtet wieder Arbeit am Medium. Die Kopplung des außerhalb des Hohlraums angeordneten Energieaggregats auf die Kolben basiert auf elektromagnetischer Wechselwirkung mit diesen.

Durch eine entsprechende Steuerung der Klappenstellung durch den Steuerkolben ist die Verdrängung des Mediums in beide Richtungen ausführbar.

Durch die Erfindung ist eine Fluidenergiemaschine bereitgestellt, bei der der Energieapparat vollständig vom flüssigen Medium bzw. von den im flüssigen Medium bewegten Teilen getrennt ist. Es sind folglich keine Abdichtungen erforderlich und es besteht nicht das Risiko von Leckagen. Des Weiteren bietet die Fluidenergiemaschine den Vorteil, dass keine Wirbelbildung erfolgt und damit keine Wirbelverluste auftreten, die die Effizienz der Fluidenergiemaschine beeinträchtigen. Aufgrund der Vermeidung schnell rotierender Bauteile ist die Fluidmaschine besonders schallemissionsarm.

Bei Schiffsantrieben sind zusätzlich z. B. die Schadwirkungen auf Wasserorganismen im Vergleich zu anderen Schiffsantrieben deutlich reduziert.

Darüber hinaus bietet die Fluidenergiemaschine eine große Variabilität in Bezug auf die Betriebsweise. So ist es das Zusammenwirken von Steuer- und Arbeitskolben derart möglich, dass die Förderung des flüssigen Mediums sowohl in einer als auch in der anderen Richtung ermöglicht ist, d. h. im Falle eines Schiffsantrieb z. B. das Umschalten in Voraus- und Rückwärtsfahrt. Weiterhin ist die Fluidenergiemaschine in Teillast betreibbar - z. B. durch nicht vollständige Öffnung der Klappen.

Vorteilhaft ist der Querschnitt des Hohlraums kreisförmig ausgebildet. Entsprechend weisen auch Wandung, Arbeitskolben und Steuerkolben einen kreisförmigen Querschnitt auf. Diese Ausführung ermöglicht eine einfache Fertigung, geringe Reibung und eine einfach zu realisierende Dichtung zwischen den Kolben und der Wandung.

Gemäß einer Ausgestaltung der Erfindung sind zwei gegenüberliegende Punkte des Mantels des Steuerkolbens durch eine Haltestrebe verbunden, sodass in der Mitte des Steuerkolbens die Haltestrebe durch eine drehbare Lagerung mit den Stellverbindern verbunden ist. Die Anordnung ist einem Scherengitter ähnlich. Durch Veränderung des Abstandes von Arbeitskolben und Steuerkolben ist die Stellung der Klappen veränderbar.

Eine Weiterbildung der Erfindung sieht vor, dass die Stellverbinder des Steuerkolbens als Klappen analog zu denen des Arbeitskolbens ausgebildet sind. Damit verfügt die Fluidenergiemaschine über zwei identische Kolben mit Klappen, wobei jeder der Kolben sowohl als Arbeitskolben als auch als Steuerkolben einsetzbar ist. Durch zwei identische Kolben reduzieren sich die auf die Klappen wirkenden Kräfte, sodass die Klappen bei gleicher Leistung entsprechend weniger stark dimensioniert werden können.

Ferner können ein oder mehrere Gleitstäbe am Mantel des Steuerkolbens schräg zur Längsrichtung in Richtung des Arbeitskolbens befestigt sein. Auf den Gleitstäben sind verschiebbare Gleitbuchsen angeordnet, wobei die Gleitbuchsen mit den Stellverbindern verbunden sind. Die schräge Anordnung bewirkt bei einer Vergrößerung des Abstandes von Arbeitskolben und Steuerkolben, dass sich die Gleitbuchsen zum Mittelpunkt des Hohlraums hin bewegen und damit die Klappen in die geöffnete Stellung bringen. Werden die Abstände von Arbeitskolben und Steuerkolben verringert, bewegen sich die Gleitbuchsen zur Wandung hin und bewirken so ein Schließen der Klappen des Arbeitskolbens.

Einer Weiterbildung der Erfindung entsprechend sind die Stellverbinder mit Langlöchern versehen. Durch die Langlöcher ist ein Verbindungselement geführt, dass die Stellverbinder über Kreuz drehbar miteinander verbindet. Das Verbindungselement bildet den Kreuzungs- und Drehpunkt, der in den Langlöchern verschiebbar ist. Dadurch ist es möglich, die Stellverbinder am Mantel des Steuerkolbens mittels einer drehbaren Lagerung zu befestigen. Wenn sich der Abstand von Arbeitskolben und Steuerkolben vergrößert, werden die Stellverbinder und Klappen in Längsrichtung ausgerichtet und bewirken so die Öffnung der Klappen und die Freigabe des Durchlasses. Die Verringerung des Abstandes von Arbeitskolben und Steuerkolben bewirkt dagegen das Schließen der Klappen.

Es kann vorgesehen sein, dass der Steuerkolben derart ausgebildet ist, dass er unmittelbar oder über ein starr mit dem Steuerkolben verbundenes Bauteil die geschlossenen Klappen des Arbeitskolbens kontaktiert. Damit können die Stellverbinder schwächer dimensioniert werden, da sie nicht die Schubkräfte zwischen Steuerkolben und Arbeitskolben übertragen müssen. Diese Schubkräfte werden durch den direkten Kontakt bzw. den Kontakt mittels eines entsprechenden Bauteils zwischen Steuerkolben und Arbeitskolben übertragen, wobei dadurch zugleich ein Druck auf die Klappen ausgeübt wird. Dieser Druck verstärkt die Schließkraft der Klappen des Arbeitskolbens.

Einer Ausgestaltung der Erfindung entsprechend besteht das Energieaggregat aus mehreren mittels einer Regelungseinheit separat schaltbaren Spulen, die die Wandung des Hohlraums umschließen. Die Spulen sind in Längsrichtung aufeinanderfolgend positioniert und stehen in elektromagnetischer Wechselwirkung mit den spulenförmig ausgebildeten Kolben. Die spulenförmige Ausbildung der Kolben ergibt sich aus dem ringförmigen Querschnitt. Durch die geschlossene Ringform der Kolben wirkt dieser als eine kurzgeschlossene Spule mit einer Windung. Durch die Aufschaltung beziehungsweise Abschaltung einer Spannung auf die die Wandung des Hohlraums umschließenden Spulen bildet sich ein Magnetfeld. Dieses Magnetfeld induziert in den Kolben eine Spannung. Der daraus resultierende Stromfluss bewirkt wiederum ein Magnetfeld, das gemäß der Lenz'schen Regel dem primären Magnetfeld entgegengesetzt ist. Letztlich führt das dazu, dass der jeweilige Kolben von der Spule abgestoßen und so elektrische Energie in Bewegungsenergie des Kolbens gewandelt wird. Die außenliegenden Spulen können nun durch eine Regelungseinheit einzeln zu- und abgeschaltet bzw. in ihrer elektrischen Leistung, z. B. durch Taktung, variiert werden.

Die Regelungseinheit ist so ausgebildet, dass neben der Steuerung der einzelnen Spulen ebenso die in den Spulen durch die Bewegung der Kolben induzierte Spannung messbar ist. Dadurch ist die Position der Kolben innerhalb der Fluidmaschine bestimmbar.

Die Fluidmaschine kann dabei so betrieben werden, dass die Spulen entsprechend ihrer räumlichen Anordnung durch die Regelungseinheit zeitlich aufeinanderfolgend entsprechend ihrer Anordnung in Längsrichtung zugeschaltet und abgeschaltet werden. Die aufeinanderfolgende Zuschaltung und Abschaltung bewirkt ein laufendes Magnetfeld. Entsprechend der Induktion einer sekundären Spannung in den Kolben wird ein gleichfalls laufendes sekundäres Magnetfeld erzeugt. Diese Schaltung führt im Sinne der Erfindung dazu, dass die nacheinander angeordneten Spulen durch aufeinanderfolgende Schaltung eine Bewegung des Arbeitskolbens und Steuerkolbens über einen längeren Weg ermöglichen. Auf diese Weise können der Arbeitskolben und der Steuerkolben im Hohlraum kontinuierlich bewegt werden. Die Bewegung der Kolben kann dabei jeweils in beide Orientierungen in Längsrichtung unabhängig voneinander oder mit konstantem Abstand zueinander erfolgen.

Durch die räumlich separierten Spulen ist es zudem ermöglicht, dass der Arbeitskolben und der Steuerkolben individuell ansteuerbar sind, folglich auch deren Abstand zueinander und damit die Stellung der Klappen.

Es kann auch vorgesehen sein, dass innerhalb der Wandung ein oder mehrere Positionssensoren im Bereich des Verfahrweges und/oder an den jeweiligen Enden des Verfahrweges der Kolben und/oder an den Kolben angeordnet sind. Die Positionssensoren erfassen die Position der Kolben, übertragen diese an die Regelungseinheit und mittels der Regelungseinheit ist die exakte Zuschaltung der Spulen entsprechend der Kolbenpositionen ermöglicht. Damit ist ein maximaler Wirkungsgrad und ein leistungsangepasster Betrieb der Fluidenergiemaschine realisierbar. Ebenso können so Störungen erfasst werden. Die Sensoren können beispielsweise als optische, elektromechanische oder elektromagnetische Sensoren ausgeführt sein.

Einer vorteilhaften Weiterbildung der Erfindung entsprechend sind an den Kolben und/oder an den Klappen Strömungs- und/oder Drucksensoren angeordnet. Diese Sensoren können Betriebszustände erfassen und werden zur Auswertung und Optimierung des Betriebs sowie zur Störungsanalyse an die Regelungseinheit weitergeleitet.

Weiterhin können zwei oder mehrere Fluidenergiemaschinen in Reihe geschaltet werden. Durch eine Steuerung der in Reihe geschalteten Fluidenergiemaschinen ist es ermöglicht, dass das Pulsieren des geförderten flüssigen Mediums, welches durch die Förder- und Rückholtakte entsteht, minimiert oder vermieden wird, indem z. B. der Arbeitskolben einer Fluidenergiemaschine mit geöffnetem Durchlass in die Ausgangsposition zurückbewegt wird, während der Arbeitskolben einer in der Reihe benachbarten Fluidenergiemaschine das Medium verdrängt.

Erfindungsgemäß ist eine bevorzugte Verwendung der Fluidenergiemaschine der Antrieb von Wasserfahrzeugen. Dazu wird die Fluidenergiemaschine durch den Rumpf des Wasserfahrzeuges führend oder an der Außen- bzw. Unterseite des Rumpfs unterhalb der Wasserlinie angeordnet. Die Anordnung im Rumpf des Wasserfahrzeuges verringert den Tiefgang und erfordert keinen besonderen Schutz der Spulen vor Kollisionen. Zudem entfällt die Reibung der äußeren Wandung der Fluidenergiemaschine im Wasser.

Durch außerhalb des Rumpfes angeordnete Fluidenergiemaschinen wird das Ladevolumen durch die Fluidenergiemaschinen nicht verringert.

Am Wasserfahrzeug können ein oder mehrere Fluidenergiemaschinen zum Einsatz kommen. Dabei ist beispielsweise bei zwei Fluidenergiemaschinen jeweils eine der Fluidenergiemaschinen steuerbordseitig und eine backbordseitig angeordnet. Die Fluidenergiemaschinen sind gemeinsam und/oder separat ansteuerbar und ermöglichen somit auch das Steuern des Wasserfahrzeuges. Durch eine entsprechende Steuerung der Klappen an den Arbeitskolben ist eine Bewegung des Wasserfahrzeuges in Vorwärts- und Rückwärtsrichtung ausführbar. Damit ist das Wasserfahrzeug hervorragend manövrierfähig. Beispielsweise kann es auf der Stelle gedreht werden.

Die Fluidenergiemaschine kann bei Wasserfahrzeuge auch als Bremse genutzt werden, indem die Klappen am Arbeitskolben vollständig geschlossen werden. Andererseits ist es möglich, z. B. bei Segelbooten in Segelfahrt, durch vollständiges Öffnen der Klappen den Strömungswiderstand zu minimieren - woraus ein Vorteil gegenüber Segelbooten mit festinstalliertem Propeller besteht, der hierbei immer einen Strömungswiderstand bildet.

Gemäß einer vorteilhaften Ausgestaltung der Erfindung sind im oder am Mantel des Arbeitskolbens (und/oder des Steuerkolbens) Permanentmagnete angeordnet. Die Permanentmagnete bewirken bei Bewegung des Arbeitskolbens die Induktion einer Spannung in den Spulen. Damit kann eine Bremswirkung zur Energiegewinnung genutzt werden. Die elektrische Energie kann beispielsweise in einem Akkumulator gespeichert werden.

Ferner kann die Fluidenergiemaschine mit in den Kolben angeordneten Permanentmagneten als Kraftmaschine zur Energiewandlung verwendet werden. Bei geschlossenen Klappen des Arbeitskolbens wird die im flüssigen Medium vorhandene kinetische und/oder potentielle Energie in eine Bewegung der Kolben transformiert. Dies wiederum verursacht eine Induktion in den Spulen des Energieapparates und damit die Gewinnung elektrischer Energie. Dadurch kann beispielsweise Bremsenergie von Wasserfahrzeugen in Elektroenergie gewandelt und ggf. gespeichert werden. Weiterhin ist - durch Rückführung der Kolben bei geöffneten Klappen mittels Energiezufuhr - ein getakteter, kontinuierlicher Betrieb zu Gewinnung elektrischer Energie möglich, indem sich energieerzeugende Arbeitstakte mit energiebrauchenden Rückführtakten abwechseln.

Die Erfindung ist nachfolgend anhand verschiedener Ausführungsbeispiele und mit Bezug auf die schematischen Zeichnungen näher erläutert. Dazu zeigen als Schnittdarstellungen:
Fig. 1 und Fig. 2. die Fluidenergiemaschine mit Steuerkolben und Arbeitskolben jeweils in um 90 ° gedrehter Ansicht, wobei die Steuerung der Klappen über Stellverbinder realisiert ist und die Klappen fast vollständig geöffnet sind,
Fig. 3 und Fig. 4 die Fluidenergiemaschine mit Steuerkolben und Arbeitskolben jeweils in um 90 ° gedrehter Ansicht, wobei die Steuerung der Klappen über Stellverbinder realisiert ist und die Klappen teilweise geschlossen sind,
Fig. 5 und Fig. 6 die Fluidenergiemaschine mit Steuerkolben und Arbeitskolben jeweils in um 90 ° gedrehter Ansicht, wobei die Steuerung der Klappen über Stellverbinder realisiert ist und die Klappen fast vollständig geschlossen sind,
Fig. 7 und Fig. 8 die Fluidenergiemaschine mit Steuerkolben und Arbeitskolben jeweils in um 90 ° gedrehter Ansicht, wobei die Steuerung der Klappen über Stellverbinder und Gleitstäbe realisiert ist und die Klappen fast vollständig geöffnet sind,
Fig. 9 und Fig. 10 die Fluidenergiemaschine mit Steuerkolben und Arbeitskolben jeweils in um 90 ° gedrehter Ansicht, wobei die Steuerung der Klappen über Stellverbinder und Gleitstäbe realisiert ist und die Klappen teilweise geschlossen sind,
Fig. 11 und Fig. 12 die Fluidenergiemaschine mit Steuerkolben und Arbeitskolben jeweils in um 90 ° gedrehter Ansicht, wobei die Steuerung der Klappen über Stellverbinder und Gleitstäbe realisiert ist und die Klappen fast vollständig geschlossen sind,
Fig. 13 und Fig. 14 die Fluidenergiemaschine mit Steuerkolben und Arbeitskolben jeweils in um 90 ° gedrehter Ansicht, wobei die Steuerung der Klappen über Stellverbinder mit Langloch realisiert ist und die Klappen fast vollständig geöffnet sind,
Fig. 15 und Fig. 16 die Fluidenergiemaschine mit Steuerkolben und Arbeitskolben jeweils in um 90 ° gedrehter Ansicht, wobei die Steuerung der Klappen über Stellverbinder mit Langloch realisiert ist und die Klappen teilweise geschlossen sind,
Fig. 17 und Fig. 18 die Fluidenergiemaschine mit Steuerkolben und Arbeitskolben jeweils in um 90 ° gedrehter Ansicht, wobei die Steuerung der Klappen über Stellverbinder mit Langloch realisiert ist und die Klappen fast vollständig geschlossen sind,
Fig. 19 den Steuerkolben mit Gleitstäben in drei Ansichten,
Fig. 20 den Arbeitskolben mit zwei Klappen in drei Ansichten,
Fig. 21 den Arbeitskolben mit einer Klappe in drei Ansichten,
Fig. 22 die Fluidenergiemaschine mit Steuerkolben und Arbeitskolben aus Fig. 5, wobei der Steuerkolben verlängert ist und gegen die geschlossenen Klappen drückt,
Fig. 23 den mit Permanentmagneten bestückten Kolben und
Fig. 24 den schematischen Aufbau des Energieaggregates.

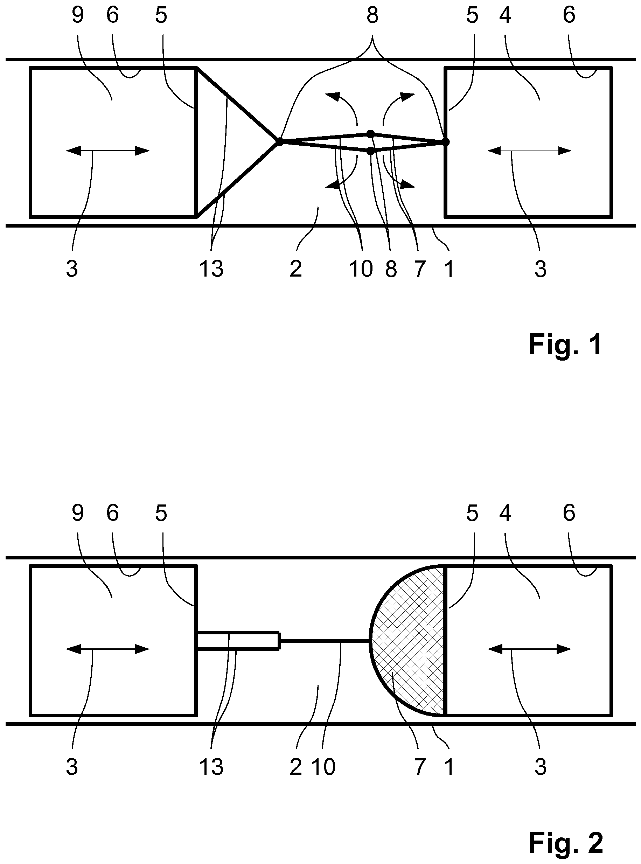

Der prinzipielle Aufbau der Fluidenergiemaschine, wie in den Figuren 1 bis 18 dargestellt, wird nachfolgend beschrieben.

Der Arbeitskolben 4 und der Steuerkolben 9 sind in dem Hohlraum 2, der von der Wandung 1 umgeben ist, in der Längsrichtung 3 beweglich angeordnet. Die Wandung 1 ist hier als Rohr ausgebildet, das den Hohlraum 2 umschließt. Der Hohlraum 2 dient dem Transport des Mediums - im Ausführungsbeispiel Wasser - und ist dazu mit diesem gefüllt. Innerhalb des Hohlraums 2 werden sowohl der Arbeitskolben 4 als auch der Steuerkolben 9 geführt.

Der Arbeitskolben 4 als auch der Steuerkolben 9 weisen jeweils den zylindrischen Mantel 6 auf, wobei der Mantel 6 mit der Innenseite der Wandung 1 korrespondiert. Innerhalb des zylindrischen Mantels 6 ist der Durchlass 5 des Mediums vorgesehen. Dieser Durchlass 5 kann durch die - in den Ausführungsbeispielen zwei - Klappen 7 des Arbeitskolbens 4 verschlossen und wieder geöffnet werden. Die beiden Klappen 7 sind dazu am Mantel 6 des Arbeitskolbens 4 mittels der als Scharnier ausgebildeten drehbaren Lagerung 8 gelagert. Der Steuerkolben 9 ist immer für das Medium offen, außer im Sonderfall, wenn die Stellverbinder 10 als Klappen 7 ausgeführt sind und am Steuerkolben 9 angebracht sind.

Damit können der Steuerkolben 9 und der Arbeitskolben 4 bei geöffneten Klappen 7 vom Medium Wasser nahezu ungehindert durchströmt werden. Die geöffneten Klappen 7 verringern nur mit ihrem Profil den Querschnitt des Durchlasses 5.

Entsprechend ist es möglich, dass der Steuerkolben 9 und der Arbeitskolben 4 bei geöffneten Klappen 7 im Hohlraum 2 bewegt werden können, ohne dass, abgesehen von der Reibung, eine Wirkung auf das Medium ausgeübt wird. Wenn die beiden halbkreisförmigen Klappen 7 des Arbeitskolbens 4 geschlossen sind, sperren sie den Durchlass 5 durch den Arbeitskolben 4.

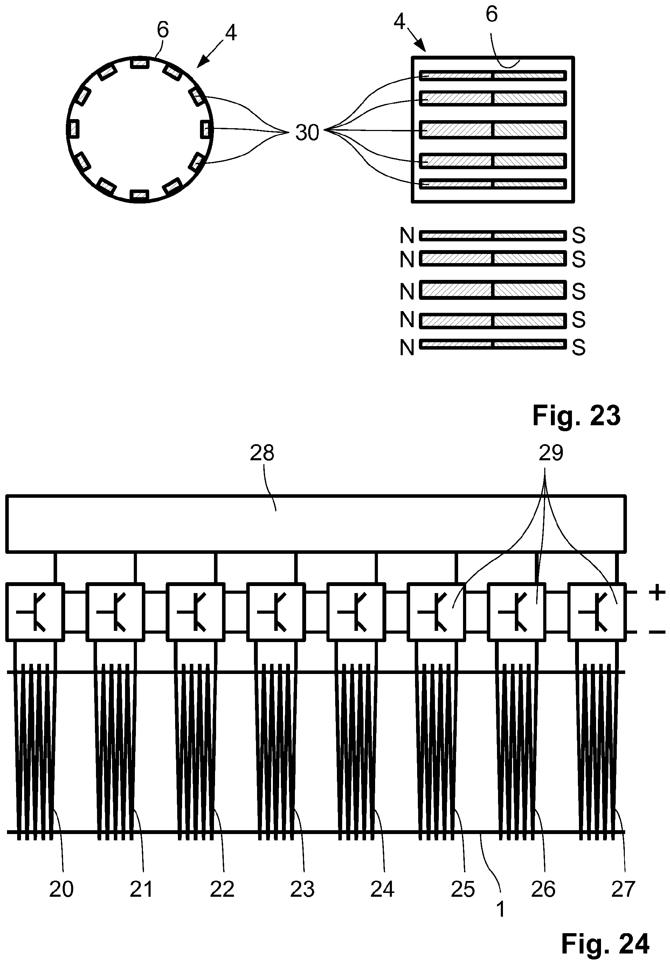

Der Antrieb vom Arbeitskolben 4 und Steuerkolben 9 erfolgt, wie in Figur 24 gezeigt, durch um die Wandung 1 gelegte Wicklungen der Spulen 20 bis 27. Die Spulen 20 bis 27 sind in der Längsrichtung 3 aufeinanderfolgend angeordnet und durch die Regelungseinheit 28 ansteuerbar. Durch eine aufeinanderfolgende Zu- bzw. Abschaltung derjenigen Spulen 20 bis 27, die sich gerade im Bereich des Arbeitskolbens 4 beziehungsweise des Steuerkolbens 9 befinden, werden die Kolben 4, 9 bewegt.

Die Bewegung der Kolben 4, 9 wird durch einen elektromagnetischen Effekt erzielt, der auf der Lenz'schen Regel beruht. Dazu sind der Arbeitskolben 4 und der Steuerkolben 9 als metallische, zylindrische Mantelringe 6 ausgeführt, die als kurzgeschlossene Spulen mit einer Windung wirken. Somit kann ein auf die Kolben 4, 9 einwirkendes Magnetfeld im Arbeitskolben 4 beziehungsweise Steuerkolben 9 eine Spannung induzieren, die einen Stromfluss im Arbeitskolben 4 beziehungsweise Steuerkolben 9 nach sich zieht. Der Stromfluss bewirkt wiederum ein Magnetfeld, das zum Magnetfeld der äußeren Spulen 20 bis 27 entgegengesetzt gepolt ist. Die beiden entgegengesetzten Magnetfelder wirken abstoßend aufeinander. Da die äußeren Spulen 20 bis 27 feststehen, bewegen sich der Arbeitskolben 4 beziehungsweise der Steuerkolben 9 entsprechend. Durch eine aufeinanderfolgende Zu- und Abschaltung der zu dem Arbeitskolben 4 beziehungsweise dem Steuerkolben 9 jeweils naheliegend angeordneten Spulen 20 bis 27 können der Arbeitskolben 4 beziehungsweise der Steuerkolben 9 im Hohlraum 2 unabhängig voneinander in der Längsrichtung 3 bewegt werden.

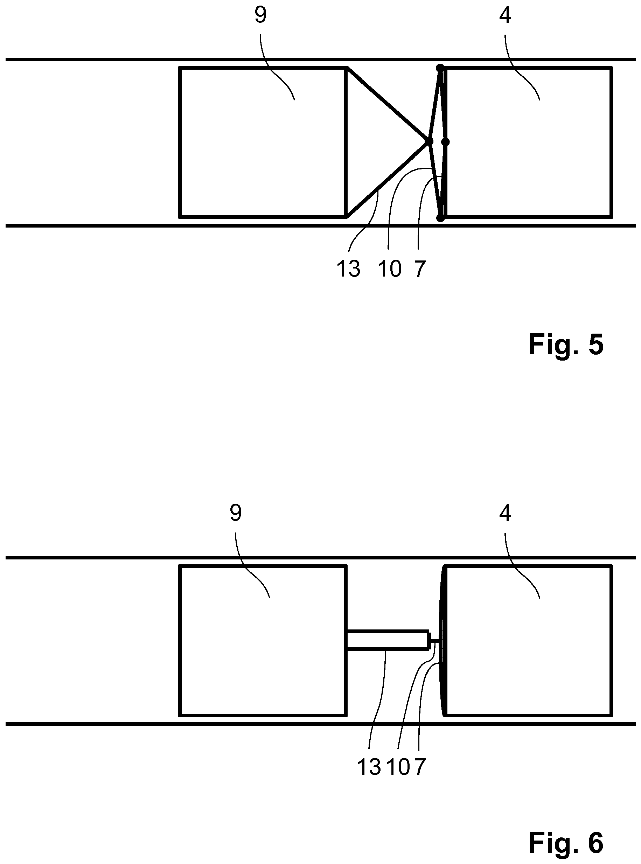

Die Klappen 7 sind am zylindrischen Mantel 6 des Arbeitskolbens 4 mit einer drehbaren Lagerung 8 befestigt und können zwischen einer Stellung, die den Durchlass 5 freigibt, wie in den Figuren 1, 2, 7, 8, 13, 14 und 20 dargestellt, und einer den Durchlass 5 sperrenden Stellung, wie in den Figuren 5, 6, 11, 12, 17, 18 und 22 dargestellt, bewegt werden.

Entsprechend wird beispielsweise bei Zuschaltung der Spule 20 ein Magnetfeld erzeugt, das auf den in unmittelbarer Nähe befindlichen Arbeitskolben 4 einwirkt und so die Induktion einer Spannung im Mantel 6 des Arbeitskolbens 4 bewirkt. Die Spannung zieht einen Stromfluss in dem als Spule mit einer kurzgeschlossenen Windung wirkenden Arbeitskolben 4 nach sich. Der Stromfluss bewirkt wiederum ein zweites Magnetfeld, das dem primären Magnetfeld entgegengerichtet ist. Entsprechend führt die abstoßende Wirkung der beiden Magnetfelder dazu, dass der Arbeitskolben 4 von der Spule 20 abgestoßen wird. Wenn in der nächsten Spule 21, sobald der Arbeitskolben 4 diese gerade passiert hat, ein Stromfluss durch Anlegen einer Spannung ermöglicht wird, wiederholt sich der beschriebene Effekt. Eine aufeinanderfolgende Zuschaltung der Spulen 20 bis 27 bewirkt entsprechend ein laufendes Magnetfeld, das bei einer entsprechenden Positionierung den Arbeitskolben 4 vor sich hertreibt. Auf diese Weise kann der Arbeitskolben 4 bei geschlossenen Klappen 7 Arbeit am Medium verrichten. Die Rückbewegung erfolgt analog durch schrittweises Zu- bzw. Abschalten der Spulen 20 bis 27. Die Bewegung des Steuerkolbens 9 erfolgt in der gleichen Weise durch die jeweilige Schaltung der im Bereich des Steuerkolbens 9 befindlichen Spulen 20 bis 27. Durch entsprechende Ansteuerung der Spulen 20 bis 27 mit der Regelungseinheit 28 können der Arbeitskolben 4 und der Steuerkolben 9 unabhängig voneinander bewegt werden. Das Öffnen und Schließen der Klappen 7 erfolgt durch die Variation des Abstandes zwischen dem Arbeitskolben 4 und dem Steuerkolben 9. Somit können alle Abläufe zur Verdrängung des Mediums im Hohlraum 2 realisiert werden.

Selbstverständlich können wesentlich mehr Spulen zum Einsatz kommen als in der Figur 24 gezeigt.

In den Figuren 1, 3, 5, 7, 9, 11, 13, 15 und 17 sind jeweils die Fluidenergiemaschine mit dem Steuerkolben 9 und dem Arbeitskolben 4 in einer Schnittdarstellung von der Seite gezeigt. Die Figuren 2, 4, 6, 8, 10, 12, 14, 16 und 18 zeigen dieselbe Fluidenergiemaschine entsprechend der jeweils vorhergehenden Figurennummer in einer Schnittdarstellung in einer zu den vorhergehenden Darstellungen um 90 ° gedrehten Ansicht.

Die Figuren 1 bis 6 zeigen eine Ausführung mit beweglichen Stellverbindern 10, die im Zentrum des Steuerkolbens 9 mittels einer drehbare Lagerung 8 mit diesem verbunden und auf der anderen Seite mit den Außenseiten der Klappen 7 durch drehbare Lagerungen 8 befestigt sind. Die Verbindung mit dem Steuerkolben 9 erfolgt durch zwei Haltestreben 13, die von den gegenüberliegenden Umfangsseiten bis zur Mitte des Steuerkolbens 9 eine starre Verbindung herstellen.

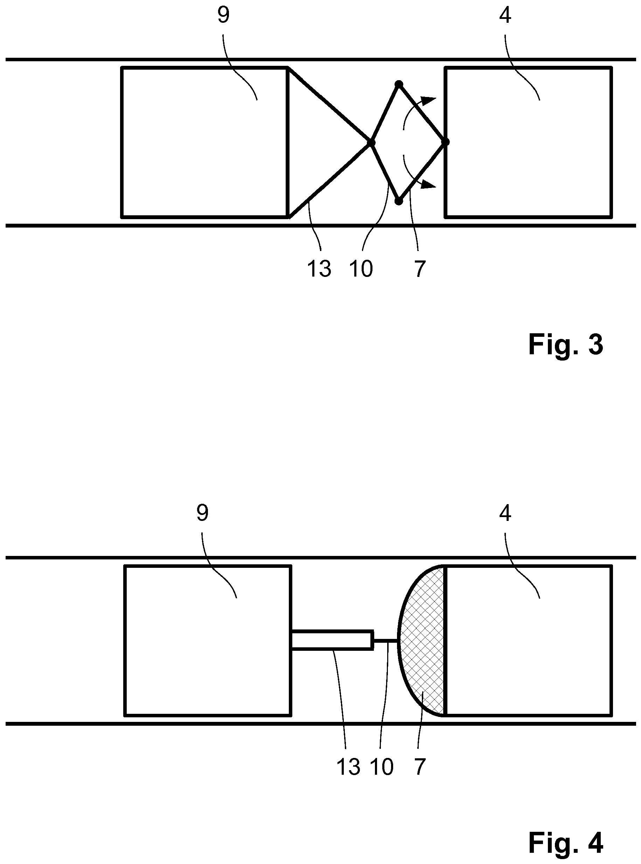

Die Bewegung der Klappen 7 erfolgt mittels den Stellverbindern 10, die in der Mitte des Steuerkolbens 9 mit den Haltestreben 13 drehbar verbunden sind. Die Stellverbinder 10 sind auf der gegenüberliegenden Seite jeweils mit den Klappen 7 drehbar verbunden. Wenn der Abstand von Arbeitskolben 4 und Steuerkolben 9 verringert wird, werden die Klappen 7 auseinandergedrückt und der Durchlass 5 verschlossen, wie die Figuren 5 und 6 zeigen. Bei Vergrößerung des Abstands von Arbeitskolben 4 und Steuerkolben 9 öffnen sich die Klappen 7, die in dieser Endstellung entsprechend der Längsrichtung 3 ausgerichtet sind, wie in den Figuren 1 und 2 dargestellt. Damit kann der Arbeitskolben 4, ohne Arbeit am Medium zu verrichten, in die Ausgangsposition zurückbewegt werden. Die Figuren 3 und 4 zeigen die Zwischenstellung mit halb geöffneten Klappen 7.

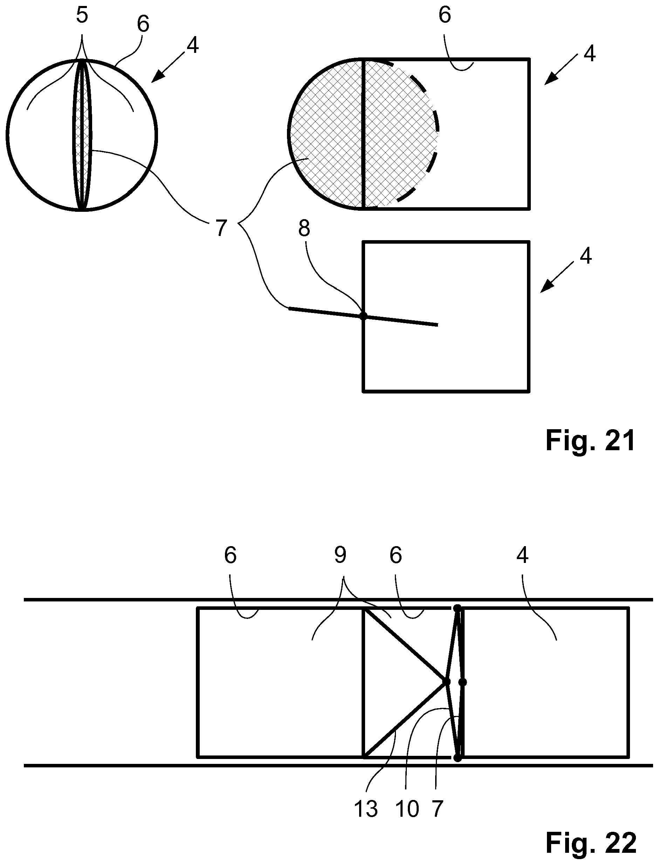

In der Figur 22 ist eine Ausführung aus der Figur 5 gezeigt, wobei hier der Steuerkolben 9 soweit verlängert ist, dass dieser gegen die geschlossenen Klappen 7 drückt und somit einen stärkere Schließkraft bewirkt. Zugleich können die Stellverbinder 10 geringer dimensioniert werden, da sie die Schubkräfte nicht vollständig übertragen müssen.

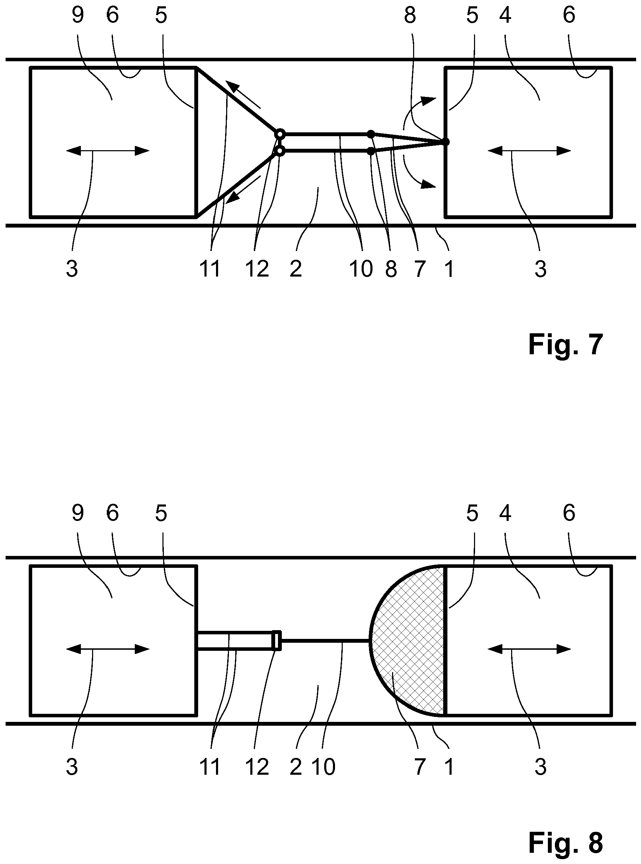

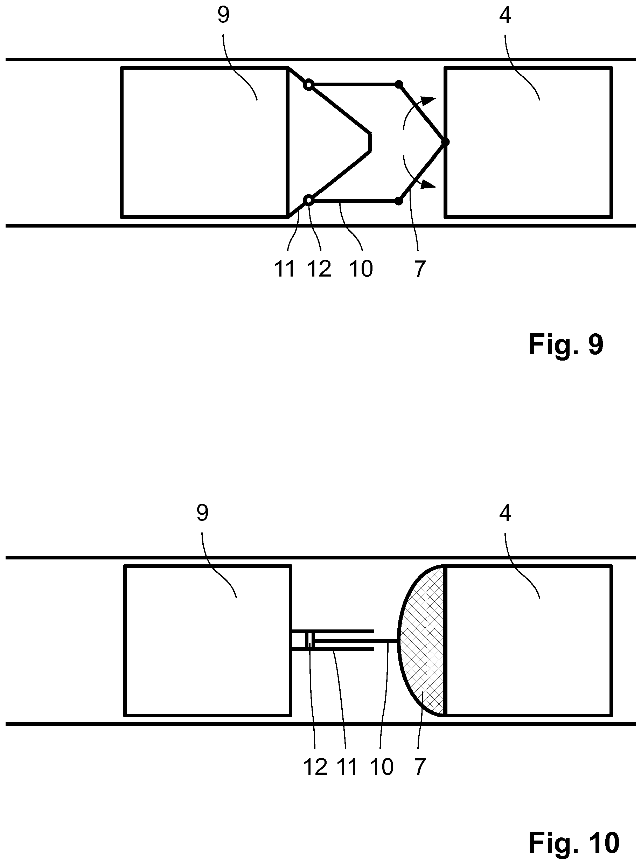

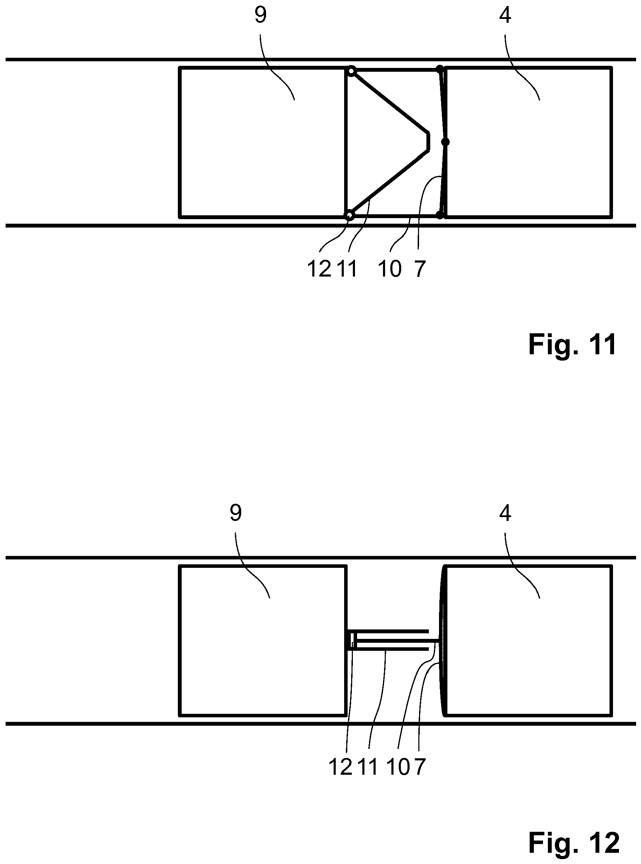

Die Figuren 7 bis 12 zeigen eine Steuerung der Klappen 7 mit den Stellverbindern 10, den Gleitstäben 11 und den Gleitbuchsen 12. Entsprechend sind die Klappen 7 mittels der drehbaren Lagerung 8 mit dem Arbeitskolben 4 verbunden. Auf der gegenüberliegenden Seite sind die Klappen 7 mit den Stellverbindern 10 ebenfalls mittels den drehbaren Lagerungen 8 beweglich verbunden. An den Stellverbindern 10 sind auf der gegenüberliegenden Seite die Gleitbuchsen 12 starr befestigt. Die Gleitbuchsen 12 sind auf den Gleitstäben 11 verschiebbar angeordnet, wobei die Gleitstäbe 11 schräg zur Längsrichtung 3 ausgerichtet und mit dem Steuerkolben 9 verbunden sind. Durch eine Verringerung des Abstandes von Arbeitskolben 4 und Steuerkolben 9 verschieben sich die Gleitbuchsen 12 nach außen, was dazu führt, dass die Klappen 7 des Arbeitskolbens 4 geschlossen werden. Eine Zwischenposition dazu ist in der Figur 9 und der Figur 10 gezeigt. Die geschlossenen Klappen 7 für diese Ausführung der Klappensteuerung zeigen die Figur 11 und die Figur 12. Wird der Abstand zwischen Arbeitskolben 4 und Steuerkolben 9 wieder vergrößert, verschieben sich die Gleitbuchsen 12 zur Mitte des Steuerkolbens 9 hin und bewirken die Freigabe des Durchlasses 5 durch den Arbeitskolben 4, wie die Figuren 7 und 8 zeigen.

Alternativ können die Gleitbuchsen 12 drehbar mit den Stellverbindern 10 verbunden sein. Weiterhin können die Gleitstäbe 11 auch bogenförmig ausgeführt sein.

Durch die Zu- beziehungsweise Abschaltung der Spulen 20 bis 27 können der Arbeitskolben 4 und der Steuerkolben 9 unabhängig voneinander bewegt werden, sodass unterschiedliche Klappenstellungen durch die Variation des Abstandes zwischen Arbeitskolben 4 und Steuerkolben 9 möglich sind.

Nachfolgend wird für die Figuren 7 bis 12 beschrieben, wie durch die Veränderung des Abstandes zwischen dem Arbeitskolben 4 und dem Steuerkolben 9 die Verrichtung von Arbeit am Medium realisiert wird. Durch Verringerung des Abstands zwischen dem Arbeitskolben 4 und dem Steuerkolben 9 verschieben sich die Gleitbuchsen 12 zum Mantel 6 des Steuerkolbens 9 hin, wie in der Figur 11 und der Figur 12 gezeigt, und bewirken, dass die Klappen 7 den Durchlass 5 verschließen. In dieser Position kann die Fluidenergiemaschine Arbeit am Medium verrichten. Wird der Abstand zwischen dem Arbeitskolben 4 und dem Steuerkolben 9 vergrößert, verschieben sich die Gleitbuchsen 12 zur Mitte des Steuerkolbens 9 hin, wie in den Figuren 7 und 8 gezeigt, und bewirken die Öffnung der Klappen 7 und somit die Freigabe des Durchlasses 5 durch den Arbeitskolben 4. Der Arbeitskolben 4 kann ohne Arbeit zu verrichten in die Ausgangsposition zurückbewegt werden.

Die Betriebsweise der Fluidenergiemaschine gemäß der Figuren 1 bis 18 wird nachfolgend anhand der Ausführung gemäß der Figuren 7 bis 12 beschrieben. Das flüssige Medium soll hier von rechts nach links bewegt werden. Dazu wird der Arbeitskolben 4 mit geschlossenen Klappen 7, wie in den Figuren 11 und 12 gezeigt, von rechts nach links verschoben. Die Klappen 7 verdrängen das Medium in die entsprechende Richtung. Somit verrichtet der Arbeitskolben 4 durch die geschlossenen Klappen 7 Arbeit am Medium. Die Klappen 7 bewirken durch die Bewegung des Arbeitskolbens 4 eine Verdrängung des Mediums. Wenn der Arbeitskolben 4 in seiner linken Endposition angekommen ist, wird der Steuerkolben 9 weiterbewegt, sodass sich der Abstand zwischen dem Arbeitskolben 4 und dem Steuerkolben 9 vergrößert und die Klappen 7, wie in der Figur 7 und der Figur 8 dargestellt, offen stehen. Anschließend erfolgt die gemeinsame Rückbewegung des Steuerkolbens 9 und des Arbeitskolbens 4 mit geöffneten Klappen 7 nach rechts. Damit wird, abgesehen von der unvermeidlichen Reibung, keine Kraft auf das Medium übertragen, sodass die Bewegung ohne Verrichtung von Arbeit erfolgt. In der Ausgangsposition angelangt, wird der Steuerkolben 9 weiter auf den Arbeitskolben 4 zubewegt, sodass die Stellverbinder 10 mit den verbundenen Gleitbuchsen 12 sich entlang der Gleitstäbe 11 nach außen verschieben und die Klappen 7 somit wieder geschlossen werden, wie in den Figuren 9 bis 12 gezeigt. Anschließend beginnt die Bewegung des Arbeitskolbens 4 erneut nach links, um wieder Arbeit am Medium zu verrichten.

Die Fluidenergiemaschine ist auch in der Lage, das Medium von links nach rechts zu bewegen. Entsprechend ist der Abstand von Arbeitskolben 4 und Steuerkolben 9, wie in den Figuren 11 und 12 gezeigt, minimal und die Klappen 7 sind entsprechend geschlossen, wobei sich gleichzeitig Arbeitskolben 4 und Steuerkolben 9 gemeinsam nach rechts bewegen. Die Rückbewegung von Arbeitskolben 4 und Steuerkolben 9 nach links erfolgt, dann mit offenen Klappen 7, wie in Figur 7 und Figur 8 gezeigt.

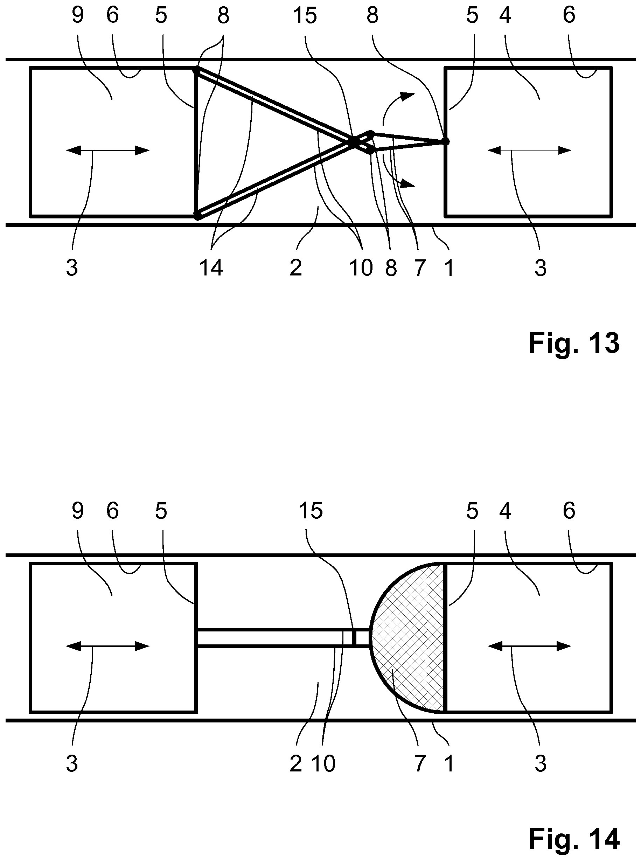

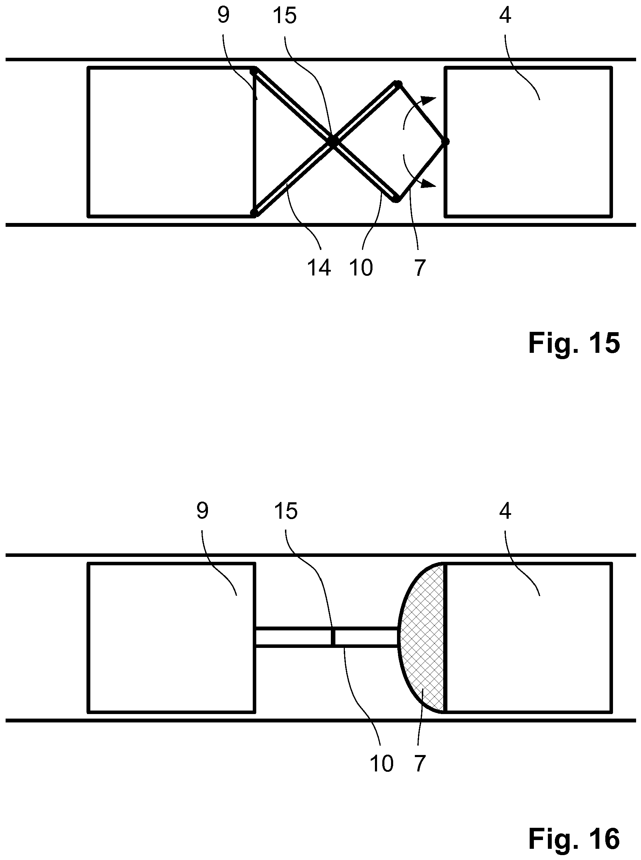

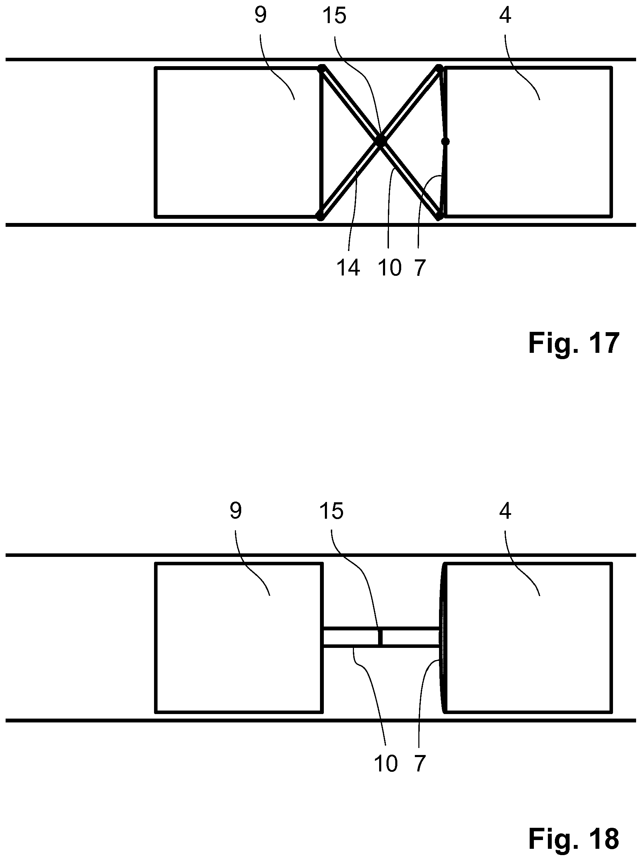

Die Figuren 13 bis 18 zeigen zwei Stellverbinder 10, die jeweils das Langloch 14 aufweisen und in diesem Langloch 14 durch das Verbindungselement 15 drehbar miteinander verbunden sind. Dabei ist das Verbindungselement 15 in den Langlöchern 14 verschiebbar angeordnet, sodass sich der Drehpunkt verschieben kann. Die Stellverbinder 10 sind hier am Mantel 6 des Steuerkolbens 9 mit den drehbaren Lagerungen 8 befestigt. Die andere Seite der Stellverbinder 10 ist wiederum mit den Klappen 7 durch die drehbaren Lagerungen 8 beweglich verbunden. Auch hier sind die Klappen 7 am Mantel 6 des Arbeitskolbens 4 mit je einer drehbaren Lagerung 8 befestigt. Wenn der Abstand zwischen Arbeitskolben 4 und Steuerkolben 9 verringert wird, wie die Figuren 15, 16 und - in der Endposition - die Figuren 17 und 18 zeigen, werden die Klappen 7 geschlossen. Bei Vergrößerung des Abstandes von dem Arbeitskolben 4 zu dem Steuerkolben 9 werden die Klappen 7 wieder geöffnet. Die vollständig geöffneten Klappen 7 zeigen die Figuren 13 und 14.

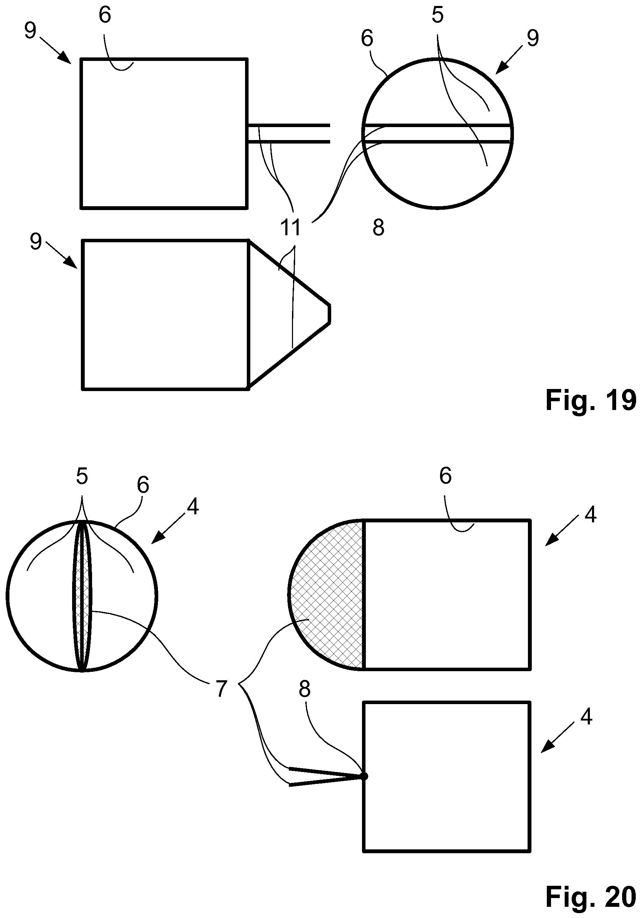

In der Figur 19 ist der Steuerkolben 9 in drei Ansichten dargestellt. Die Seitenansicht zeigt den Steuerkolben 9 von der Seite mit den Gleitstäben 11. Die Ansicht darunter zeigt den Steuerkolben 9 um 90 ° verdreht mit den Gleitstäben 11. Die rechts dargestellte Ansicht zeigt den zylinderförmigen Mantel 6 des Steuerkolbens 9 von vorn mit den Gleitstäben 11. Es wird deutlich, dass der Durchlass 5 durch den Steuerkolben 9 immer freigegeben ist.

Die Figur 20 zeigt den Arbeitskolben 4 mit zwei Klappen 7 in drei Ansichten. Rechts oben ist der Arbeitskolben 4 in einer Ansicht von der Seite gezeigt. Die Klappen 7 sind fast vollständig geöffnet, wie die Darstellung darunter verdeutlicht. Die Klappen 7 sind mit der drehbaren Lagerung 8 am Mantel 6 des Arbeitskolbens 4 befestigt. Die auf der linken Seite dargestellte Ansicht von vorn auf den Arbeitskolben 4 zeigt, dass die hier fast vollständig geöffneten Klappen 7 den Durchlass 5 durch den zylinderförmigen Mantel 6 des Arbeitskolbens 4 freigeben. In der Figur 21 ist der Arbeitskolben 4 in einer alternativen Ausführung mit einer einzelnen Klappe in drei Ansichten gezeigt; die Beschreibung und die Bezugszeichen sind in Übereinstimmung zu der Figur 20.

In der Figur 23 ist der Arbeitskolben 4 mit den Permanentmagneten 30 dargestellt. Die Permanentmagneten 30 sind an der Innenseite des Mantels 6 angeordnet, wie in der Darstellung auf der linken Seite zu erkennen ist. Rechts daneben ist eine Darstellung des zylinderringförmigen Mantels 6 des Arbeitskolbens 4 mit den daran angeordneten Permanentmagneten 30 gezeigt. Unten sind die Permanentmagneten 30 in ihrer Anordnung zueinander dargestellt, wobei zusätzlich die Polung der Permanentmagnete 30 durch die Angaben N (Nord) bzw. S (Süd) beispielhaft verdeutlicht ist.

Durch die Verwendung von stabförmigen Permanentmagneten 30 gemäß der Figur 23 im Arbeitskolben 4 wird die Umwandlung von mechanischer (potenzieller sowie auch kinetischer) Energie des Mediums in elektrische Energie ermöglicht.

Wenn der Arbeitskolben 4 und ggf. auch der Steuerkolben 9 mit den Permanentmagneten 30 mit geschlossenen Klappen 7 vom Medium bewegt werden, induzieren die Permanentmagneten 30 eine Spannung in den außen liegenden Spulen 20 bis 27. Damit wird Bremsenergie als mechanische Energie in elektrische Energie gewandelt, die beispielsweise in Akkumulatoren gespeichert werden kann.

Somit ist eine Verwendung der Fluidenergiemaschine zur rekuperativen Abbremsung des Wasserfahrzeuges nutzbar. Ebenso ist der Einsatz als Wasserkraftmaschine, z. B. in den Fallrohren von Pumpspeicherkraftwerken, zur Gewinnung elektrischer Energie möglich, wobei die Fluidenergiemaschine zugleich als Pumpe arbeiten kann.

Die Figur 24 zeigt einen schematischen Aufbau eines elektromagnetisch wirkenden Energieaggregates. Dazu sind entlang der den Hohlraum 2 umschließenden Wandung 1 die Spulen 20 bis 27 angeordnet. Die Spulen 20 bis 27 sind durch die Regelungseinheit 28 mittels der Schaltelemente 29 separat ansteuerbar, um die als kurzgeschlossenen Spulen mit einer Windung wirkenden Kolben 4, 9 entsprechend der Erfordernisse zur Durchführung des Verfahrens im Hohlraum 2 zu bewegen.

In einer nicht dargestellten Ausführung kann die Fluidenergiemaschine mit zwei Arbeitskolben 4 ausgeführt sein, die zugleich für den jeweils anderen Arbeitskolben 4 als Steuerkolben 9 wirken. Das Zusammenwirken der Kolben 4, 9 erfolgt entsprechend der Beschreibung zu den Figuren 7 bis 12. Dabei wirken die Klappen 7 jeweils für den anderen Kolben 4 als Stellverbinder 10.

Durch zwei Arbeitskolben 4 werden die wirkenden Kräfte auf die Klappen 7 verringert, sodass die Klappen 7 bei gleicher Leistung entsprechend geringer dimensioniert werden können. Zudem kann die Fluidenergiemaschine durch jeweils zwei gleichzeitig aktive Spulen 20 bis 27, die auf die beiden Kolben 4, 9 wirken, insgesamt eine größere Leistung bereitstellen.

Ein bevorzugtes Einsatzgebiet für die Fluidenergiemaschine ist der Schiffsantrieb. Diese - nicht dargestellte Anordnung - weist zwei Fluidenergiemaschinen auf, wobei die Eine steuerbordseitig und die Andere backbordseitig am Schiffsrumpf positioniert ist. Durch die voneinander unabhängige Realisierung der Bewegungen von Arbeitskolben 4 und Steuerkolben 9 kann das Schiff gesteuert werden. Wenn beispielsweise auf der Steuerbord ein schnellerer Ablauf der Verdrängungstakte erfolgt, führt das Schiff eine Bewegung nach backbord aus. Wenn die Fluidenergiemaschinen gegenläufig arbeiten, kann das Schiff eine Drehung auf der Stelle vollziehen.

### Liste der verwendeten Bezugszeichen

- 1: Wandung
- 2: Hohlraum
- 3: Längsrichtung
- 4: Arbeitskolben
- 5: Durchlass
- 6: Mantel (des Arbeitskolbens bzw. Steuerkolbens)
- 7: Klappe
- 8: drehbare Lagerung
- 9: Steuerkolben
- 10: Stellverbinder
- 11: Gleitstab
- 12: Gleitbuchse
- 13: Haltestrebe
- 14: Langlöcher
- 15: Verbindungselement
- 20 bis 27: Spule
- 28: Regelungseinheit
- 29: Schaltelement
- 30: Permanentmagnet

## Patentansprüche

1. Fluidenergiemaschine mit elektromagnetisch gekoppelten Kolben zur Förderung eines flüssigen Mediums sowie zur Gewinnung von Energie aus der kinetischen und/oder potenziellen Energie eines flüssigen Mediums aufweisend einen durch eine Wandung (1) umschlossenen längenausgedehnten Hohlraum (2), ein Energieaggregat sowie zwei innerhalb des Hohlraums (2) in Längsrichtung (3) verschiebbar geführte und mit dem Energieaggregat elektromagnetisch gekoppelte Kolben (4, 9), **dadurch gekennzeichnet, dass** die Kolben (4, 9) als Hohlkolben mit je einem Mantel (6) ausgebildet sind und so einen Durchlass (5) für das Medium ermöglichen, wobei der erste Kolben (4) als ein Arbeitskolben (4) ausgebildet ist, an dessen einem Endbereich zwei Klappen (7) am Mantel (6) des Arbeitskolbens (4) schwenkbar befestigt sind, wobei die Klappen (7) so ausgebildet und entsprechend arretierbar sind, dass durch sie der Durchlass (5) des Arbeitskolbens (4) veränderbar und verschließbar ist, und wobei jede der Klappen (7) die Fläche und Form des halben Querschnittes des Durchlasses (5) aufweist und mit einer drehbaren Lagerung (8) verbunden ist, wobei die Lagerung (8) zumindest am Mantel (6) des Arbeitskolbens (4) angeordnet ist, und der zweite Kolben (9) als ein Steuerkolben (9) ausgebildet ist, wobei der Steuerkolben (9) und die Klappen (7) mittels einer oder mehrerer Stellverbinder (10) beweglich derart miteinander verbunden sind, dass die Stellung der Klappen (7) durch die Veränderung des Abstandes zwischen Arbeitskolben (4) und Steuerkolben (9) veränderbar ist.

2. Fluidenergiemaschine nach Anspruch 1, **dadurch gekennzeichnet, dass** diese ferner eine Haltestrebe (13) aufweist, wobei die Haltestrebe (13) an zwei gegenüberliegenden Punkten des Mantels (6) des Steuerkolbens (9) an demselben befestigt ist und die Haltestrebe (13) mittig mittels einer drehbaren Lagerung (8) mit den Stellverbindern (10) verbunden ist.

3. Fluidenergiemaschine nach Anspruch 1 oder 2, **dadurch gekennzeichnet, dass** die Stellverbinder (10) als Klappen (7) ausgebildet sind, wobei diese an einem Endbereich am Mantel (6) des Steuerkolbens (9) schwenkbar befestigt und analog zu den Klappen (7) des Arbeitskolbens (4) gestaltet sind.

4. Fluidenergiemaschine nach Anspruch 1 oder 2, **dadurch gekennzeichnet, dass** diese ferner Gleitstäbe (11) und auf diesen geführte Gleitbuchsen (12) aufweisen, wobei die Gleitstäbe (11) am Mantel (6) des Steuerkolbens (9) befestigt sind und schräg in Richtung zum Arbeitskolben (4) hin verlaufen, wobei die Gleitbuchsen (12) mit den Stellverbindern (10) verbunden sind.

5. Fluidenergiemaschine nach Anspruch 1 oder 2 aufweisend zwei Stellverbinder (10), **dadurch gekennzeichnet, dass** die Stellverbinder (10) als Stellstäbe (10) mit Langlöchern (14) ausgebildet sind und die Stellstäbe (10) durch ein durch die Langlöcher (14) der Stellstäbe (10) geführtes Verbindungselement (15) über Kreuz miteinander verbunden sind, wobei das Verbindungselement (15) innerhalb der Langlöcher (14) verschiebbar und die Stellstäbe (10) um das Verbindungselement (15) drehbar sind.

6. Fluidenergiemaschine nach einem der Ansprüche 1 bis 5, **dadurch gekennzeichnet, dass** das Energieaggregat aus mehreren separat zuschaltbaren Spulen (20, 21, 22, 23, 24, 25, 26, 27) besteht, die die Wandung (1) des Hohlraums (2) umschließen, wobei die Spulen (20, 21, 22, 23, 24, 25, 26, 27) in Längsrichtung (3) aufeinanderfolgend angeordnet und durch eine Regelungseinheit (28) einzeln zuschaltbar und abschaltbar sind.

7. Fluidenergiemaschine nach einem der Ansprüche 1 bis 6, **dadurch gekennzeichnet, dass** im oder am Mantel (6) des Arbeitskolbens (4) und/oder des Steuerkolbens (9) Permanentmagnete (30) angeordnet sind.

8. Fluidenergiemaschine nach einem der Ansprüche 1 bis 7, **dadurch gekennzeichnet, dass** die Fluidenergiemaschine als Arbeitsmaschine zum Antrieb von Wasserfahrzeugen verwendet wird, wobei die Fluidenergiemaschine durch den Rumpf des Wasserfahrzeuges führend oder an der Außen- bzw. Unterseite des Rumpfes angeordnet ist.

9. Fluidenergiemaschine nach Anspruch 7, **dadurch gekennzeichnet, dass** die Fluidenergiemaschine als Kraftmaschine zur Energiewandlung verwendet wird, wobei durch eine, von der im flüssigen Medium vorhandenen kinetischen und/oder potentiellen Energie hervorgerufenen, Bewegung der Kolben (4, 9) mittels Induktion in den Spulen (20, 21, 22, 23, 24, 25, 26, 27) des Antriebsapparats elektrische Energie gewonnen wird.

## Claims

1. A fluid energy machine with electromagnetically coupled pistons for transportation of a liquid medium as well as harvesting energy from the kinetic and/or potential energy of a liquid medium comprising an elongated cavity (2) enclosed by a cladding (1), a power unit as well as two electromagnetically coupled pistons (4, 9), said pistons (4, 9) being movably guided within the cavity (2) in longitudinal direction (3) and being electromagnetically coupled to the power unit,
**characterized in that**
the pistons (4, 9) are designed as hollow pistons each having a jacket (6) and thus permit a passage (5) of the medium, wherein the first piston (4) is designed as a working piston (4) having two shutters (7) rotatable attached to the jacket (6) of the working piston (4) in one of its end regions, wherein the shutters (7) are designed and suitably lockable in such a way that the passage (5) of the working piston (4) is variable and lockable by means of the shutters (7), and wherein each of the shutters (7) exhibits the area and shape of half of the cross-section of the passage (5) and is connected to a rotatable bearing (8), wherein the bearing (8) at least is arranged at the jacket (6) of the working piston (4), and the second piston (9) is designed as a control piston (9), wherein the control piston (9) and the shutters (7) are movably connected with each other by means of one or several control connectors (10) in a way that the positioning of the shutters (7) is alterable by a variation of the distance between the working piston (4) and the control piston (9).

2. The fluid energy machine according to claim 1, **characterized in that** it further comprises a fixing rod (13), wherein the fixing rod (13) is fixed to the jacket (6) of the control piston (9) at two opposing positions and the fixing rod (13) in its mid is connected to the control connectors (10) by means of a rotatable bearing (8).

3. The fluid energy machine according to claim 1 or 2, **characterized in that** the control connectors (10) are designed as shutters (7), wherein they are rotatable fixed to the jacket (6) of the control piston (9) in one of its end regions and are formed in the same way as the shutters (7) of the working piston (4).

4. The fluid energy machine according to claim 1 or 2, **characterized in that** it further comprises sliding rods (11) and sliding bushings (12) guided by the sliding rods (11), wherein the sliding rods (11) are attached to the jacket (6) of the control piston (9) and run transversely in a direction towards the working piston (4), wherein the sliding bushings (12) are connected to the control connectors (10).

5. The fluid energy machine according to claim 1 or 2, comprising two control connectors (10), **characterized in that** the control connectors (10) are designed as control rods (10) with slotted holes (14) and the control rods (10) are cross-connected by a connecting element (15) running through the slotted holes (14) in the control rods (10), wherein the connecting element (15) is slidable within the slotted holes (14) and the control rods (10) are rotatable about the connecting element (15).

6. The fluid energy machine according to any one of claims 1 to 5, **characterized in that** the power unit consists of several separately switchable coils (20, 21, 22, 23, 24, 25, 26, 27) enclosing the cladding (1) of the cavity (2), wherein the coils (20, 21, 22, 23, 24, 25, 26, 27) are arranged one after the other in the longitudinal direction (3) and are individually connectable and disconnectable by means of a control unit (28).

7. The fluid energy machine according to any one of claims 1 to 6, **characterized in that** permanent magnets (30) are arranged within or at the jacket (6) of the working piston (4) and/or the control piston (9).

8. The fluid energy machine according to any one of claims 1 to 7, **characterized in that** the fluid energy machine is used as a working machine for driving water vehicles, wherein the fluid energy machine is arranged penetrating through the hulk of the water vehicle or at the outside or underside of the hulk.

9. The fluid energy machine according to claim 7, **characterized in that** the fluid energy machine is used as a power machine for energy conversion, wherein electric energy is generated via induction in the coils (20, 21, 22, 23, 24, 25, 26, 27) of the power unit caused by a movement of the pistons (4, 9) due to kinetic and/or potential energy present in the liquid medium.

## Revendications

1. Machine à énergie hydraulique dotée de piston a accouplement électromagnétique pour le pompage d'un milieu liquide et la récupération d'énergie à partir de l'énergie cinétique et/ou potentielle d'un milieu liquide comprenant une cavité (2) expansée longitudinalement entourée d'une paroi (1), une unité d'énergie et deux pistons (4, 9) qui sont guidés de manière mobile dans la direction longitudinale (3) à l'intérieur de la cavité (2) et couplés électromagnétiquement à l'unité d'énergie,
**caractérisé en ce que** les pistons (4, 9) sont réalisés sous forme de pistons creux ayant chacun un carter (6) et permettent ainsi un passage (5) pour le fluide, le premier piston (4) étant conçu comme un piston de travail (4), dans une zone d'extrémité dont deux volets (7) sont fixés de manière pivotante sur le carter (6) du piston de travail (4), les volets (7) étant conçus et verrouillables de telle sorte que le passage (5) du piston de travail (4) peut être changé et fermé par eux, et dans lequel chacun des volets (7) a la surface et la forme de la moitié de la section transversale du passage (5) et est relié à un palier rotatif (8), le palier (8) étant disposé au moins sur le carter (6) du piston de travail (4), et le deuxième piston (9) est réalisé sous la forme d'un piston de commande (9), le piston de commande (9) et les volets (7) étant reliés l'un à l'autre de manière mobile au moyen d'un ou plusieurs connecteurs de réglage (10) de telle sorte que la position des volets (7) peut être modifiée en modifiant la distance entre le piston de travail (4) et le piston de commande (9).

2. Machine à énergie hydraulique selon la revendication 1, **caractérisée en ce qu'**elle comprend en outre une jambe de retenue (13), dans laquelle la jambe de retenue (13) est fixée au piston de commande (9) en deux points opposés du carter (6) du piston de commande (9) et la jambe de retenue (13) est reliée de manière centrale aux connecteurs de réglage (10) au moyen d'un palier rotatif (8).

3. Machine à énergie hydraulique selon la revendication 1 ou 2, **caractérisée en ce que** les connecteurs de réglage (10) sont formés comme des volets (7) ceux-ci étant montés de manière pivotante dans une zone d'extrémité sur le carter (6) du piston de commande (9) et étant conçus de manière analogue aux volets (7) du piston de travail (4).

4. Machine à énergie hydraulique selon la revendication 1 ou 2, **caractérisée en ce qu'**ils comprennent en outre des tiges coulissantes (11) et des douilles coulissantes (12) guidées sur celles-ci, les tiges coulissantes (11) étant fixées sur le carter (6) du piston de commande (9) et s'étendant obliquement dans la direction du piston de travail (4), les douilles coulissantes (12) étant reliées aux connecteurs de réglage (10).

5. Machine à énergie hydraulique selon la revendication 1 ou 2 comprenant deux connecteurs de réglage (10), **caractérisée** en ce les connecteurs de réglage (10) sont tiges de réglage (10) avec trous oblongs (14), et les tiges de réglage (10) sont reliées en croix par un élément de liaison (15) guidé à travers les trous oblongs (14) des tiges de réglage (10), l'élément de liaison (15) étant déplaçable à l'intérieur des trous oblongs (14) et les tiges de réglage (10) pouvant tourner autour de l'élément de liaison (15).

6. Machine à énergie hydraulique selon l'une des revendications 1 à 5, **caractérisée en ce que** l'unité d'énergie est constituée de plusieurs bobines commutables séparément (20, 21, 22, 23, 24, 25, 26, 27), qui entourent la paroi (1) de la cavité (2), les bobines (20, 21, 22, 23, 24, 25, 26, 27) étant disposées l'une après l'autre dans la direction longitudinale (3) et pouvant être connectées et déconnectées individuellement par une unité de commande (28).

7. Machine à énergie hydraulique selon l'une des revendications 1 à 6, **caractérisée en ce que** des aimants permanents (30) sont disposés dans ou sur le carter (6) du piston de travail (4) et/ou du piston de commande (9).

8. Machine à énergie hydraulique selon l'une des revendications 1 à 7, **caractérisée en ce que** la machine à énergie hydraulique est utilisée comme machine de travail pour la conduite de véhicules aquatiques, la machine à énergie hydraulique étant guidée à travers la coque du véhicule aquatique ou étant disposée à l'extérieur ou sous la coque.

9. Machine a énergie hydraulique selon la revendication 7, **caractérisée en ce que** la machine à énergie hydraulique est utilisée comme machine motrice pour la conversion d'énergie, dans laquelle l'énergie électrique est générée par un mouvement des pistons (4, 9), qui est provoqué par l'énergie cinétique et/ou potentielle présente dans le milieu liquide, par induction dans les bobines (20, 21, 22, 23, 24, 25, 26, 27) de l'unité d'énergie.
